Europäisches Patentamt

European Patent Office

Office européen des brevets

(11) Numéro de publication: **0 123 617**
**A2**

## (12) DEMANDE DE BREVET EUROPEEN

(21) Numéro de dépôt: **84400772.4**

(22) Date de dépôt: **18.04.84**

(51) Int. Cl.³: **H 02 K 35/00**
**H 02 K 1/34, H 02 K 15/02**

(30) Priorité: **20.04.83 FR 8306447**

(43) Date de publication de la demande:
**31.10.84 Bulletin 84/44**

(84) Etats contractants désignés:
**BE DE GB IT**

(71) Demandeur: **Jarret, Jacques Henri**
**32 allée des Soudanes**
**F-78430 Louveciennes(FR)**

(71) Demandeur: **Jarret, Jean-Marie Baptiste**
**21 avenue Foch**
**F-75116 Paris(FR)**

(72) Inventeur: **Jarret, Jacques Henri**
**32 allée des Soudanes**
**F-78430 Louveciennes(FR)**

(72) Inventeur: **Jarret, Jean-Marie Baptiste**
**21 avenue Foch**
**F-75116 Paris(FR)**

(74) Mandataire: **Madeuf, René Louis et al,**
**Cabinet Madeuf 3, Avenue Bugeaud**
**F-75116 Paris(FR)**

(54) Anneau magnétique pour générateurs rectilignes à pistons libres.

(57) Le générateur comprend deux bobines (1a, 1b) entourées par le circuit magnétique d'un inducteur (2). Le circuit magnétique délimite avec un équipage alternatif (3) mobile entre deux positions un entrefer (4) dont la valeur varie en fonction du déplacement de l'équipage mobile. L'équipage mobile est réalisé sous la forme d'un anneau magnétique constitué par des tôles (5) en matériau ferromagnétique d'épaisseur et de largeur uniformes et disposées radialement.

Fig.2

EP 0 123 617 A2

Anneau   magnétique pour générateurs rectilignes à pistons
libres.

La présente invention concerne un générateur à excitation
impulsionnelle et s'applique notamment à des générateurs
rectilignes à pistons libres.

On sait que pour certains moteurs thermiques à pistons
libres sans embiellage, on utilise, pour la transformation
de l'énergie mécanique en énergie électrique, des générateurs de courant comportant un inducteur à double
bobine cylindrique et un piston comprenant un anneau
magnétique mobile qui se déplace à l'intérieur de l'inducteur suivant un trajet rectiligne.

Dans le brevet français No 75 19905 déposé le 9 juin 1975,
on a déjà décrit un alternateur à excitation impulsionnelle comportant au moins une bobine entourée par un
circuit magnétique qui délimite, avec l'anneau magnétique
d'un piston mobile entre deux positions un entrefer dont
la valeur varie en fonction du déplacement dudit piston.
Les extrémités de la bobine sont respectivement reliées
aux bornes positive et négative d'une source de courant
à tension constante par l'intermédiaire de deux vannes
électroniques commandées par un dispositif à impulsions,
des liaisons unidirectionnelles étant en outre prévues
entre chaque extrémité de la bobine et la borne opposée
de la source de courant.

La présente invention concerne la réalisation de l'anneau
magnétique qui permet d'obtenir un meilleur rapport que
précédemment entre l'énergie transférée à chaque cycle
et la masse dudit anneau magnétique.

Pour une course donnée de l'anneau magnétique lors de son déplacement rectiligne, la quantité d'énergie transférée est proportionnelle aux forces mécaniques qui s'exercent entre l'inducteur et l'anneau magnétique mobile, notamment à la composante de ces forces parallèle à la direction du mouvement. Cette composante, pour une section frontale donnée de matériau magnétique, est proportionnelle au champ magnétique établi à l'intérieur de l'entrefer principal qui n'est autre que le volume balayé par le déplacement de l'anneau magnétique. Or, il est nécessaire qu'un tel champ magnétique de valeur élevée soit obtenu grâce au passage du courant dans les bobines sans que soit saturé le circuit en matériau ferromagnétique qui enveloppe les bobines et qui localise les champs utiles dans l'entrefer principal. Ces considérations conduisent simultanément à accepter une saturation du matériau magnétique de l'anneau sans que le circuit magnétique fixe de l'inducteur soit lui-même saturé.

L'invention vise à résoudre le problème ci-dessus et permet également de réduire le poids et le coût d'un générateur rectiligne, tel que celui décrit dans le brevet ci-dessus.

Conformément à l'invention, le générateur comprend une partie mobile réalisée sous la forme d'un anneau magnétique constitué par des tôles en matériau ferromagnétique d'épaisseur et de largeur uniformes et disposées radialement ; la largeur des tôles est choisie de telle manière que les tôles magnétiques se trouvent très rapprochées les unes des autres dans leur partie la plus proche de l'axe de l'anneau, et régulièrement espacées les unes des autres dans leur partie la plus proche de l'inducteur.

Conformément à une autre caractéristique de l'invention, la distance entre les tôles à proximité de l'entrefer résiduel est telle que la proportion du matériau ferromagnétique dans cette zone représente 50 à 80 % de la proportion des tôles dans les circuits magnétiques de l'inducteur.

L'invention s'étend également à un procédé pour la réalisation de l'anneau magnétique qui est obtenu en plaçant dans un moule des tôles préalablement découpées et cintrées, la partie cintrée de chaque tôle étant disposée dans le moule symétriquement par rapport à la partie cintrée des tôles voisines.

Diverses autres caractéristiques de l'invention ressortent d'ailleurs de la description détaillée qui suit.

Des formes de réalisation de l'objet de l'invention sont représentées, à titre d'exemples non limitatifs, au dessin annexé.

La fig. 1 est une demi-vue schématique en coupe d'un générateur conforme à l'invention.

La fig. 2 est une vue en coupe de la fig. 1, prise le long de la ligne II-II de cette figure.

La fig. 3 est une section partielle, à plus grande échelle, de l'anneau magnétique de la fig. 1.

Les fig. 4a et 4b représentent chacune, en coupe-élévation, une demi-vue d'un générateur conforme à l'invention dans une position caractéristique du générateur.

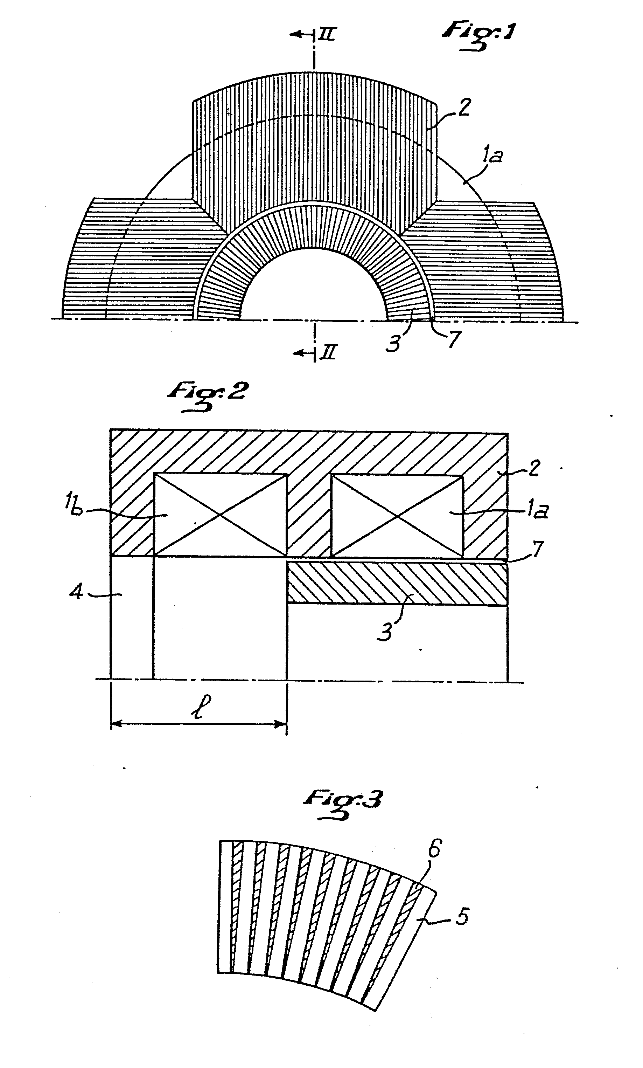

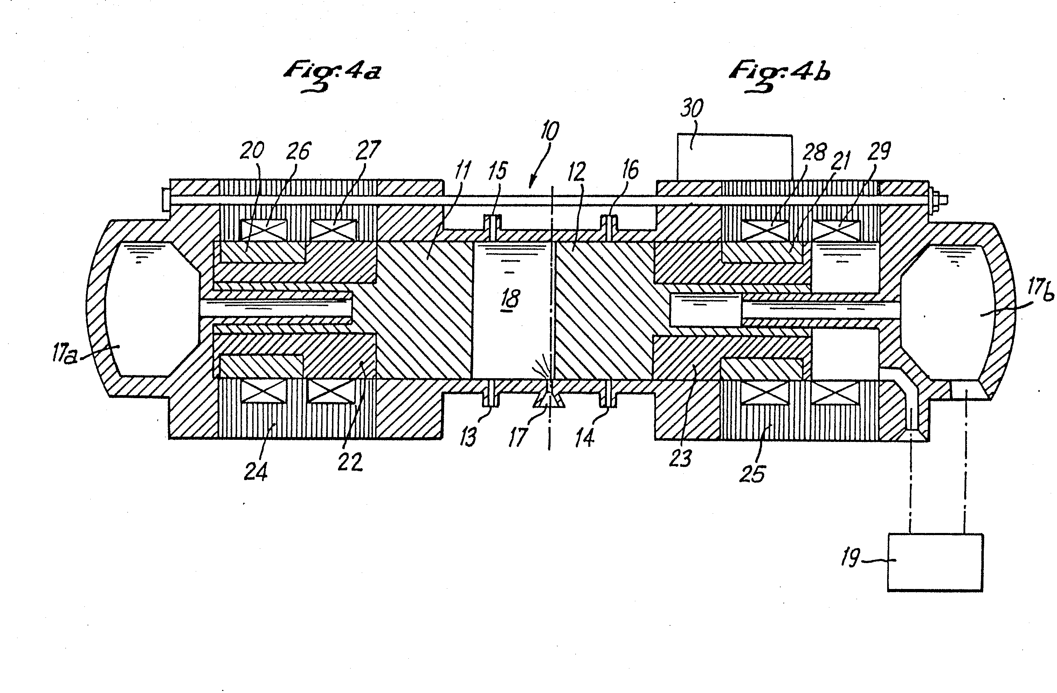

En se référant maintenant au dessin, les fig. 1 et 2 représentent, de manière schématique, un générateur conforme à l'invention. Chaque bobine 1a, 1b du générateur

est enveloppée par un circuit magnétique ou inducteur 2 en tôle de fer feuilleté qui délimite, avec un équipage mobile 3 réalisé sous la forme d'un anneau en tôle ferromagnétique feuilletée, un entrefer 4 dont la valeur varie en fonction des déplacements de l'équipage mobile.

A la fig. 3, on a représenté une section partielle de l'anneau magnétique constituant l'équipage mobile 3. L'anneau magnétique 3 est formé par des lamelles 5 radiales réalisées par des tôles ferromagnétiques espacées par un isolant 6.

Conformément à l'invention, les lamelles 5 sont constituées par des tôles en matériau ferromagnétique d'épaisseur et de largeur uniformes et disposées radialement. La largeur des lamelles 5 de l'anneau magnétique est choisie de telle manière que celles-ci se trouvent très rapprochées les unes des autres dans leur partie la plus proche de l'axe de l'anneau magnétique et régulièrement espacées les unes des autres dans leur partie la plus proche de l'inducteur 2. La distance entre les lamelles 5, à proximité de l'entrefer résiduel 7, est telle que la proportion du matériau ferromagnétique dans cette zone représente 50 à 80 % de la proportion de tôle dans les circuits magnétiques de l'inducteur 2.

Pour que la partie des lamelles de tôle 5 de l'anneau magnétique 3 qui se trouve au droit d'une bobine 1a, 1b parcourue par du courant soit convenablement saturée, la largeur de chaque tôle 5 est sensiblement égale à celle des tôles du circuit magnétique fixe à proximité de l'entrefer résiduel 7. La section de fer saturée est donc égale à la section constante de chaque tôle de l'anneau, multipliée par le nombre de tôles pouvant être montées radialement suivant les dispositions précédemment indiquées. Le rapport de la section frontale du matériau magnétique de l'anneau 3 à la surface développée du matériau magnétique de chaque branche de l'inducteur 2 au droit de l'entrefer résiduel 7 permet d'évaluer le champ magnétique maximal qui peut être localisé dans l'entrefer principal 4 sans saturation du circuit magnétique de l'inducteur 2.

Pour réaliser un anneau magnétique conforme à l'invention, on utilise des tôles magnétiques rectangulaires découpées à des dimensions légèrement supérieures à celles de l'anneau magnétique que l'on veut obtenir. Dans un exemple de réalisation, on découpe de la tôle de ferrocobalt de 0,2 mm d'épaisseur en rectangles de 12,2 mm x 62,4 mm. Les tôles sont légèrement cintrées et introduites dans un moule de dimensions convenables en ayant soin d'intervertir le sens du cintrage pour chacune des tôles par rapport aux tôles voisines. L'effet de ressort ainsi obtenu impose aux tôles une disposition radiale, telle que celle représentée de manière schématique à la fig. 3 et qui ne pourrait être que difficilement réalisée par tout autre moyen. Lorsque la totalité des tôles a été mise en place dans le moule, on injecte un produit isolant et collant qui, après cuisson, forme l'isolant 6 de la fig. 3 et maintient les tôles entre elles en permettant un usinage définitif de l'anneau magnétique aux cotes désirées.

Le matériau ferromagnétique utilisé est, de préférence, soit un alliage de ferro-cobalt, comme indiqué précédemment, soit du fer au silicium à grains orientés qui est plus lourd mais moins cher que les alliages de ferro-cobalt.

Les fig. 4a et 4b représentent deux vues d'une réalisation d'un générateur construit suivant les figures précédentes.

Aux fig. 4a et 4b, le générateur comporte un seul cylindre thermique 10 dans lequel se déplacent deux équipages mobiles cylindriques 11 et 12.

Le cylindre thermique 10 présente des lumières d'admission 13 et 14, des lumières d'échappement 15 et 16 et un injecteur central 17. Les équipages mobiles 11 et 12 oscillent symétriquement entre, d'une part, un point mort extérieur atteint lorsque les faces opposées des pistons des équipages mobiles ont comprimé un liquide contenu dans les chambres 17a et 17b de deux dispositifs hydrauliques élastiques de renvoi (fig. 4a) et, d'autre part, un point mort intérieur atteint lorsque les faces de travail des pistons s'immobilisent à une distance de l'ordre de 2 mm l'un de l'autre après avoir comprimé le mélange combustible introduit en 17 dans la chambre médiane à volume variable 18 qu'ils délimitent et avant que le mélange combustible ne renvoie les pistons. Au dessin, on a représenté les chambres 17a et 17b contenant le liquide de renvoi schématiquement relié à une source de liquide 19.

Chaque équipage mobile 11, 12 comporte un anneau magnétique, respectivement 20 et 21, analogue à l'anneau magnétique 3 des fig. 1 et 2. Les anneaux magnétiques 20 et 21 sont sertis dans une matière non magnétique 22, 23, et ils sont destinés à être déplacés au cours du mouvement alternatif des équipages mobiles 11, 12 devant un inducteur annulaire feuilleté, respectivement 24 et 25, analogue à l'inducteur 2 des fig. 1 et 2.

Comme dans la réalisation représentée schématiquement aux fig. 1 et 2 en ce qui concerne les bobines 1a et 1b, des bobines 26, 27 et 28, 29 sont placées parallèlement dans les encoches du circuit magnétique des inducteurs 24 et 29. On voit que lorsque l'anneau magnétique 20 relatif à l'équipage mobile 11 se trouve devant une des bobines 26 ou 27, la partie non magnétique se trouve devant l'autre bobine. Il en est de même pour l'anneau magnétique 21 par rapport aux bobines 28 et 29.

Les bobines 26, 27 et respectivement 28, 29 en liaison avec les anneaux magnétiques 20 et 21 constituent des organes de démarrage pour la mise en route du générateur, des organes d'accord des déplacements symétriques des équipages mobiles 11· et 12, ainsi que des sources de production d'énergie électrique fournie par le fonctionnement du générateur et prélevée sur les équipages mobiles à l'aller comme au retour de leurs mouvements alternatifs.

D'une manière analogue à ce qui a été expliqué dans le brevet français No 75 19905 ci-dessus, l'ensemble du générateur est excité à partir d'un dispositif représenté schématiquement en 30 tel que les extrémités des bobines soient respectivement reliées aux bornes positive et négative d'une source à courant constant par l'intermédiaire de vannes électroniques commandées par un dispositif à impulsions, des liaisons unidirectionnelles étant en outre prévues entre chaque extrémité des bobines et la borne opposée de la source de courant.

A titre d'exemple, et en se référant aux fig. 4a et 4b, on peut réaliser un générateur de courant conforme à l'invention dans lequel la course (ℓ à la fig. 2) de l'anneau magnétique 20, 21 serait de 50 mm, la longueur de l'inducteur 24, 25 serait de 112 mm avec deux bobines 26, 27 et respectivement 28, 29 de 38 mm chacune, de sorte que la longueur de chaque branche de l'inducteur 24, 25 est égale au tiers de 112 mm - 2 x 38 mm, soit 12 mm. La longueur de l'anneau magnétique 20, 21 sera alors de 62 mm correspondant à une longueur de bobine de 38 mm plus deux largeurs de branche magnétique de 12 mm. Toujours à titre d'exemple, conformément à l'invention, l'anneau magnétique 20, 21 sera constitué d'un certain nombre de tôles ferromagnétiques en forme de lamelles référencées 5 à la fig. 3, disposées radialement et présentant chacune une section de 0,2 mm d'épaisseur et de 12 mm de hauteur.

Si lesdites tôles radiales de l'anneau magnétique 20, 21 sont séparées les unes des autres par un isolant référencé 6 à la fig. 3, dont l'épaisseur varie de 0,01 mm dans leur partie la plus proche de l'axe de l'anneau à 0,13 mm dans les parties les plus proches de l'inducteur, le diamètre intérieur de l'anneau magnétique serait de 42 mm et le diamètre extérieur de 66 mm, le diamètre intérieur de l'inducteur 24, 25 étant alors de 66,3 mm pour permettre le déplacement rectiligne de l'anneau magnétique 20, 21.

La section frontale de matériau ferromagnétique (par exemple du ferro-cobalt dont l'induction de saturation a pour valeur 2,3 tesla) comportera $42\pi/0,21$ = 628 tôles. Chacune des tôles présentant une surface en mm² égale à 0,2 x 12, les 628 tôles représentent une surface de 0,2 x 12 x 628 = 1 507 mm².

D'autre part, la surface développée de chaque branche de l'inducteur 24, 25 (longueur 12 mm et diamètre de 66,3 mm) sera égale à $66,3\pi$ x 12 = 2 500 mm².

Si on limite à 1,8 tesla l'induction maximale à travers la section de 2 500 mm² de chaque branche de l'inducteur, le flux magnétique maximal sera de 1,8 x 2 500 x $10^{-6}$ =
0,0045 Weber ($10^{-6}$ étant le coefficient correspondant
du système SI). L'induction dans les tôles de l'anneau
magnétique 20, 21 sera donc approximativement de
0,0045/1 507 $10^{-6}$ = 2,986 tesla. L'induction de saturation
des tôles étant de 2,3 tesla, le champ magnétique maximal
correspondra à une induction de 2,986 - 2,3 = 0,686 tesla
et sa valeur pourra atteindre 0,686/4$\pi$ x $10^{-7}$ (4$\pi$ x $10^{-7}$
étant le coefficient correspondant du système SI) soit
548 800 ampères par mètre sans que soit dépassée l'induction maximale de 1,8 tesla recherchée dans les branches
de l'inducteur 24, 25.

La quantité d'énergie électrique susceptible d'être transférée par le générateur pendant un demi-cycle est  égale
au produit du nombre d'ampères/tours par la variation
de flux magnétique dans la partie du circuit considérée.
Le nombre d'ampères/tours est au maximum celui qui permet
d'atteindre le champ magnétique maximal de 548 800 ampères
par mètre ci-dessus, soit 548 800 x 0,038 (0,038 étant
la longueur en mètre d'une bobine) ou 20 854 ampères/tours.
La valeur moyenne pondérée est approximativement égale
à 60 % de cette valeur, c'est-à-dire égale à 12 512 ampères/
tours. La variation de flux magnétique à l'intérieur de
chaque bobine 26, 27 et respectivement 28, 29 est égale
au produit de l'induction ferrique par la section
frontale de ferro-cobalt de l'anneau magnétique 20, 21
soit 2,3 x 1 507 $10^{-6}$ = 0,003466 Weber. La quantité
d'énergie transférée par cycle sera donc de
2 x 12 512 x 0,003466 = 87 joules environ pour une masse
ferromagnétique de l'anneau de 0,62 x 0,1507 x 8,12 = 0,759 kg
(0,1507 représente, comme on l'a vu, la section en dm²
des 628 tôles et 8,12 la densité des tôles de l'anneau
alors que 0,62 représente la longueur de l'anneau en dm),
cette masse de 0,759 kg se déplaçant de $\ell$ = 50 mm à

chaque demi-cycle.

Dans un générateur linéaire conforme à celui représenté aux fig. 4a et 4b, une masse unitaire d'anneau magnétique de 0,759 kg permet de réaliser des équipages mobiles 11 et 12 ayant une masse unitaire de 1,8 kg environ autorisant une fréquence d'oscillation de 150 hertz. La puissance transférée par les deux anneaux magnétiques 20 et 21 atteindrait alors 87 x 2 x 150 = 26 000 Watts environ.

Le rapport entre la puissance obtenue, et la masse d'anneaux magnétiques est égal à $(26\,000/0,759)\,x\,\dfrac{1}{2} = 17\,128$ Watts par kg environ ce qui est tout à fait remarquable étant donné que la vitesse moyenne des équipages mobiles n'est, par hypothèse, (pour une course de 50 mm à 150 Hz) que de 0,05 x 2 x 150 = 15 mètres par seconde.

Revendications

1 - Générateur comportant au moins une bobine (1a, 1b) entourée par le circuit magnétique d'un inducteur (2) pour prélever de l'énergie électrique, ce circuit magnétique délimitant, avec un équipage alternatif (3) mobile entre deux positions, un entrefer (4) dont la valeur varie en fonction du déplacement dudit équipage mobile, l'équipage alternatif mobile étant réalisé sous la forme d'un anneau magnétique constitué par des tôles (5) en matériau ferromagnétique d'épaisseur et de largeur uniformes et disposées radialement, et la largeur des tôles étant choisie de telle manière que les tôles magnétiques se trouvent très rapprochées les unes des autres dans leur partie la plus proche de l'axe de l'anneau et régulièrement espacées les unes des autres dans leur partie la plus proche du circuit magnétique de l'inducteur, l'anneau magnétique étant caractérisé en ce que la distance entre les tôles à proximité de l'entrefer résiduelle est telle que la proportion du matériau ferromagnétique dans cette zone représente 50 à 80 % de la proportion de tôle dans les circuits magnétiques de l'inducteur.

2 - Générateur selon la revendication 1, caractérisé en ce qu'il comporte deux bobines disposées parallèlement dans les encoches du circuit magnétique de l'inducteur de manière à prélever l'énergie sur l'équipage mobile à l'aller comme au retour d'un mouvement alternatif afin d'assurer une meilleure continuité du courant fourni.

3 - Générateur selon l'une des revendications 1 ou 2, caractérisé en ce que chaque équipage mobile correspond à la partie magnétique d'un équipage d'un moteur thermique à piston libre.

4 - Procédé pour la réalisation de l'anneau magnétique
de la revendication 1, dans lequel on place dans un
moule des tôles (5) de section rectangulaire préalablement
découpées et cintrées, la partie cintrée de chaque tôle
étant disposée dans le moule symétriquement par rapport
à la partie cintrée des tôles voisines, lorsque la
totalité des tôles a été mise en place dans le moule,
on injecte un produit isolant et collant (6) qui, après
cuisson, maintient les tôles entre elles en permettant
un usinage définitif de l'anneau magnétique aux cotes
désirées.

0123617

*Fig.1*

*Fig.2*

*Fig.3*

Fig: 4a                    Fig: 4b